# EUROPEAN PATENT SPECIFICATION

(11) **EP 2 548 177 B1**
(45) Date of publication and mention of the grant of the patent: **14.12.2016**
(21) Application number: 11716975.5
(22) Date of filing: 18.03.2011
(51) Int. Cl.: G06T 15/04

(54) **DEMAND BASED TEXTURE RENDERING IN A TILE BASED RENDERING SYSTEM**
AUF ANFRAGE BASIERENDE TEXTURDARSTELLUNG IN EINEM RENDERINGSYSTEM AUF MOSAIKBASIS
RENDU DE TEXTURES FONDÉ SUR LA DEMANDE DANS UN SYSTÈME DE RENDU À BASE DE PAVÉS

(30) Priority: 19.03.2010 GB 201004676
(43) Date of publication of application: 23.01.2013
(60) Divisional application: 16197248.4
(73) Proprietor: Imagination Technologies Limited, Kings Langley, Herts WD4 8LZ (GB)
(72) Inventor: HOWSON, John William, St Albans, Hertfordshire AL2 2JD (GB)
(74) Representative: Slingsby Partners LLP
(86) International application number: PCT/GB2011/000385
(87) International publication number: WO 2011/114112

(56) References cited:
- CAPIN T ET AL: "The State of the Art in Mobile Graphics Research", IEEE COMPUTER GRAPHICS AND APPLICATIONS, IEEE SERVICE CENTER, NEW YORK, NY, US, vol. 28, no. 4, 1 July 2008 (2008-07-01), pages 74-84, XP011229506, ISSN: 0272-1716, DOI: DOI:10.1109/MCG.2008.83
- DANA COBZAS, KEITH YEREX AND MARTING JÄGERSAND: "Dynamic textures for image-based rendering of fine-scale 3D structure and animation of non-rigid motion", EUROGRAPHICS 2002, vol. 21, no. 3, 2002, - 2002, pages 493-502, XP002644684,
- BOR-SUNG LIANG ET AL: "Index Rendering: Hardware-Efficient Architecture for 3-D Graphics in Multimedia System", IEEE TRANSACTIONS ON MULTIMEDIA, IEEE SERVICE CENTER, PISCATAWAY, NJ, US, vol. 4, no. 2, 1 June 2002 (2002-06-01), XP011076492, ISSN: 1520-9210

## Description

### Field of the Invention

This invention relates to a three-dimensional computer graphics rendering system in particular to methods and apparatus associated with rendering of textures in a tile based rendering system.

### Background to the Invention

Within real time computer graphics it is common to perform renders to surfaces which can then be used as textures in subsequent renders i.e. the rendered surface becomes a new texture or a "Dynamically Rendered" texture. For example in order to render a scene that includes reflections of the scene it is common to first render the scene to an environment texture map. This map is then used during the shading of objects to produce a reflection of the environment on the objects. This may be used, for example to show a reflection in a mirrored building.

In addition to environment mapping it is common for modern computer graphics applications to use a technique called shadow mapping. The shadow mapping technique renders the depth of objects from the perspective of light sources within the scene into texture maps. These texture maps are used during the subsequent rendering of objects to determine if each pixel is in shadow with respect to the light sources. This is done by comparing the depth of the object pixel being rendered to a depth that is stored at the equivalent location within a "shadow map" texture, for example if the depth of the object is greater than that in the shadow map then it is behind another object with respect to the light source and therefore the illuminating effect of the light source should not be applied during the rendering of that pixel. It is very common for textures associated with shadow maps to be very large e.g. 2048x2048 or greater, with larger texture sizes generally being required for higher quality rendering.

It should be noted that there are many variations on the above techniques and that the above two are included as examples and that the scope of the invention is not limited to these techniques.

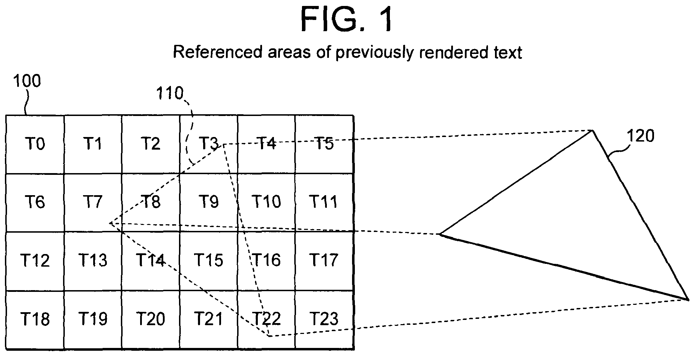

In modern graphics applications these renders to textures and the subsequent reads from them can use a significant percentage of the available memory bandwidth to render a scene at interactive frame rates. Furthermore it is not unusual for much of the data rendered into these textures to not be subsequently used. For example figure 1 illustrates a previously rendered texture 100 subdivided into regions T0 to T23 and a region 110 that maps a portion of the texture 100 into the triangle 120. As can be seen only tiles T3, T8, T9, T14 to T16, T21 and T22 of the previously rendered texture need to have been rasterised in order to satisfy the mapping of the texture to the triangle 120.

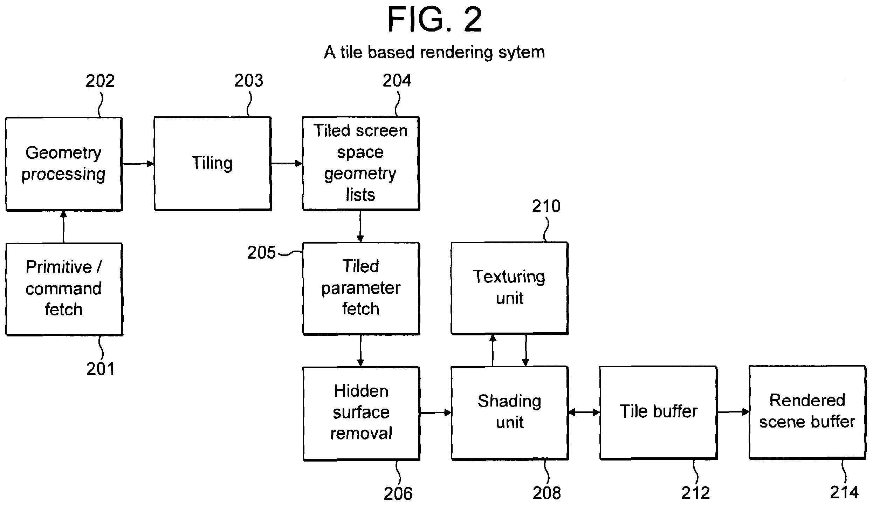

Tile based rendering systems are well-known. These subdivide an image into a plurality of rectangular blocks or tiles. The way in which this is done and the subsequent texturing and the shading performed is shown schematically in figure 2.

Firstly, a primitive/command fetch unit 201 retrieves command and primitive data from a memory and passes this to a geometry processing unit 202. This transforms the primitive and command data into screen space using well-known methods.

This data is then supplied to a tiling unit 203 which inserts object data from the screen space geometry into object lists for each one of a set of defined rectangular regions or tiles. An object list for each tile contains primitives that exist wholly or partially in that tile. The list exists for every tile on the screen, although some object lists may have no data in them. These object lists are fetched by a tile parameter fetch unit 205 which supplies them tile by tile to a hidden surface removal unit (HSR) 206 which removes surfaces which will not contribute to the final scene (usually because they are obscured by another surface). The HSR unit processes each primitive in the tile and passes only data for visible pixels to a shading unit 208.

The shading unit takes the data from the HSR and uses it to fetch textures using the texture unit 210 and applies shading to each pixel within a visible object using well-known techniques. The shading unit then feeds the textured and shaded data to an on chip tile buffer 212. As the data is temporarily stored in the on chip tile buffer external memory bandwidth associated with temporary storage eliminated.

Once each tile has been textured and shaded, the resultant data is written to an external scene buffer 214.

### Summary of the Invention

Preferred embodiments of the present invention provide a method and apparatus that enable a tile based rendering system to rasterise and store rendered texture surfaces only where they are to be used by subsequent renders. This is accomplished in an embodiment of the invention by performing the tiling phase as described above for all texture surfaces but deferring the rasterisation phase of those dynamically rendered texture surfaces to the point at which they are referenced. As the rendering of the scene that uses the "demand based texture renders" (e,g, 100 from figure 1) potentially only references a small area of each texture within each tile the system can render one or more texture tiles at the point of reference into a small write back cache for immediate use within the main render. Due to the localised nature of the references it is highly likely that the rendered data will continue to reside within the cache subsystem for any tiles for which it is required, thereby substantially reducing the memory bandwidth associated with both the rendering of the textures and their subsequent use.

### Brief Description of the Drawings

Preferred embodiments of the invention will now be described in detail by way of example with reference to the accompanying drawings in which:
Figure 1 illustrates schematically how a small region of a previously rendered texture may be subsequently referenced for texturing an object;
Figure 2 shows a schematic diagram of a known tile based rendering system as discussed above;
Figure 3 illustrates the operation of demand based texture rendering embodying the invention;
Figure 4 illustrates the modifications to a tile based rendering system for demand based texture rendering in an embodiment of the invention; and
Figure 5 illustrates the modifications to the texture pipeline required to implement demand based texture rendering in an embodiment of the invention.

### Detailed Description of Preferred Embodiments

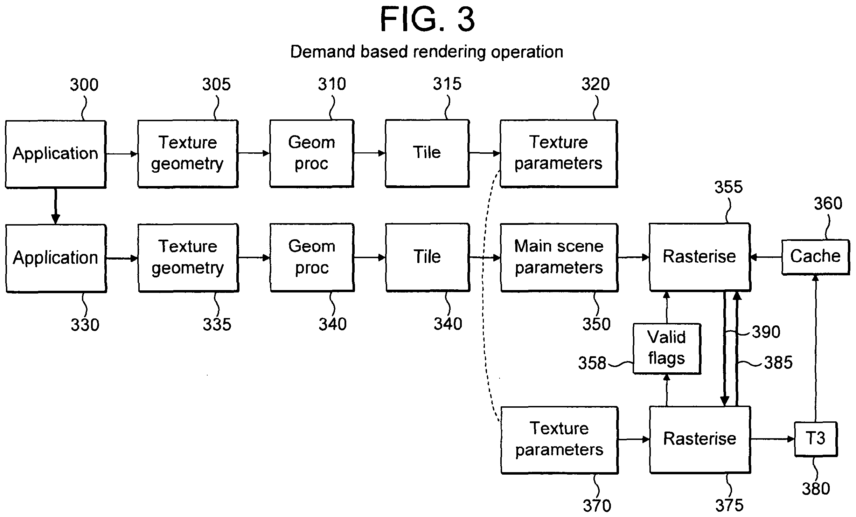

Figure 3 illustrates the operation of demand mode texture rasterisation in a tile based system. An application 300 first generates geometry 305 for an image which is to be rendered to a texture as in 100 in Figure 1. This geometry is processed at 310 using well known techniques to produce screen space geometry that is passed to a tiling unit 315 which generates tile screen space parameters 320 as described for a tile based rendering system. It should be noted that the current state of each tile within the texture i.e. if it has been rendered is indicated by a valid flags table 358. This table is generally stored within memory and contains a status flag for each tile that indicates if it has been rendered, all flags are initially cleared to indicate that no tiles have been rendered. Each time a tile is rendered a flag corresponding to that tile is set.

The application then switches to the rendering of a main scene at 330 by producing main scene geometry 335 which is then processed into screen space by geometry processor 340 and tiled at 345 to produce an object list for each tile. The resulting main scene parameters 350 are then rasterised a tile at a time at 355. During the rasterisation process the rasterisation hardware (not shown) detects areas of dynamic texture e.g. an environment map that are required but are not present in the texture store. These correspond to texturing of the type discussed with reference to figure 1 above. The rasteriser determines if each texture tile (as shown in Figure 1) has been rendered by reading the tile valid flags 358. When the rasterister determines that a texture tile has not yet been rendered the rasteriser switches from rasterising the main scene to rasterising parameters for the texture tiles required by the texture render 320 that are associated with the required region. The subsequent rasterisation process 375 produces texture image data for T3 380 (from figure 1) which is written to a cache 360. A corresponding valid flag for the texture tile is then set and the rasterisation hardware then switches back to rasterising the main scene 355 at 385. This process is repeated for all regions of the scene which are found to be required from the dynamic texture. For example from figure 1 regions T3, T8, T9, T14, T15, T16, T21 and T22. It should be noted that the remaining regions of the dynamic texture are not rasterised saving significant memory bandwidth and processing overhead.

It should be noted that the texture tile data written to the cache may either be written back to memory (not shown) or discarded when it is evicted from the cache 360. In the case where the data is discarded it may be re-created again in the future as described above if the tile (e.g. T3) is referenced again. This approach allows very large texture surfaces to be represented by the memory associated with the tiled geometry parameters only. Where texture data is discarded instead of being writtenback to memory the corresponding valid flags 358 are cleared to indicate that the texture is no longer present.

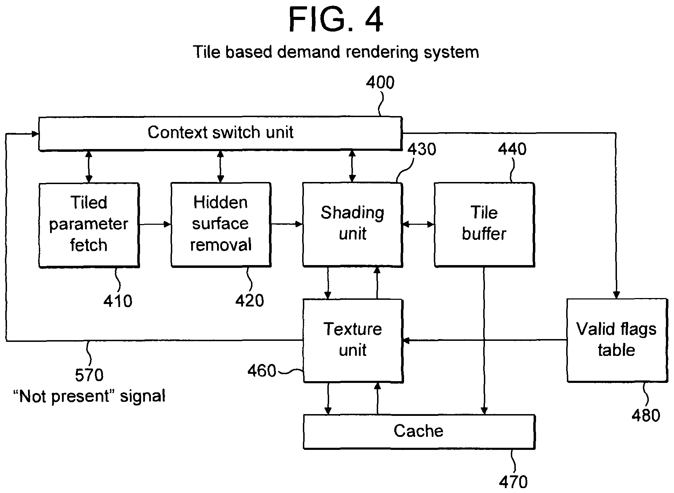

Figure 4 illustrates a system that implements tile based demand mode rendering of texture surfaces using dynamic textures as discussed above. It should be noted that the tiling/geometry processing units equivalent to these shown in figure 2 are not shown here. Tile parameter fetch unit 410 fetches the tiled parameter lists as per a normal tile based rendering system and passes the object data to the hidden surface removal unit (HSR) 420. This removes surfaces which will not contribute to the final scene (usually because they are obscured by another surface) using well known methods. The HSR unit processes each primitive in the tile and passes only data for surfaces visible at pixels to a shading unit 430.

The shading unit 430 takes the objects from the HSR unit 420 and applies shading and texturing to each pixel within each visible object using well-known techniques, these technique include issuing texture requests to a texture sampling unit (TSU) 460.

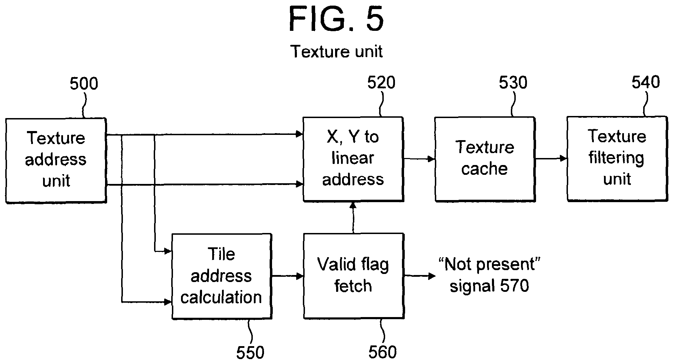

The TSU is illustrated in figure 5. The texture address unit 500 takes texture sample requests and calculates the X and Y address for each texture fetch using well known methods. The X and Y address is passed to the tile address calculation unit 550 which determines the address of the tile that the requested texture fetches will reside within. This calculation typically removes low order bits from the X and Y addresses to form a tile X and Y address, these values are then multiplied together and added to a base address to form the address of a "Tile valid flag" stored in the tile valid table (figure 4 480), which is stored in memory, it should be noted that other methods of address calculation could be used. The address of the valid flag is passed to the valid flag fetch unit 560 that retrieves the specified flag from valid flag table in memory. This flag is then emitted as the "Not present" signal 570. It should be noted that the valid flag fetch unit 560 could operate through a memory cache in order to improve its performance. The valid flag fetch unit also passes the valid flag to the address converter 520 which converts the X,Y address to a linear memory address using well known methods. If the valid flag indicates that a texture tile is not present then the address converter unit halts execution. If the valid flag indicates that a texture tile is present then the address converter unit passes the calculated texture address to the texture cache unit 530 which retrieves the texture data from either internal or external memory as necessary. The retrieved data is passed to the texture filtering unit 540 which filters the returned data using well known techniques, the resulting filtered data being passed back to the shading unit 430 in figure 4.

If the flag indicates that the texture tile hasn't already been rasterised the "not present" signal 570 is sent to the context switch unit (CSU) 400 in figure 4 indicating that it needs to switch to rasterising a tile of the texture that "missed" i.e. the texture was not available. This occurs for dynamically rendered textures, such as environment textures.

The CSU then instructs all units within the rasteriser to switch to rasterising the requested texture i.e. the missed texture tile. It should be noted that the CSU could rasterise a single missing tile or multiple tiles within the locality of the missing texture. The CSU 400 may be implemented as a hardware module, a separate programmable processor/micro controller or using a "Host" processor and device interrupts.

As the system rasterises each tile indicated by the CSU a buffer 440 outputs each completed texture tile to memory via a cache 470. This cache will typically use the well known caching type of "write back caching" so that the data resides locally within the cache when the tiles indicated by the CSU have been rasterised. The CSU then updates the tile valid flags 480 for the tiles that it has rasterised to indicate that they are now present. The cache will now store the dynamically mapped texture required for rasterisation of tiles which were flagged as requiring that texture.

On completion of the rasterisation process for the required tile(s) the CSU switches the rasterisation units back to processing the original render and allows the address converter 520 in figure 5 to proceed to issue the texture address to the cache unit as described above. As the texture tiles that were rasterised now sit locally within the cache any texture fetches for them now access the cache so reducing memory bandwidth associated with those fetches, i.e. dynamically mapped textures stored in the cache.

It should be noted that the cache could be replaced with a memory buffer that discards tiles rather than writing them back to memory when making space for new tile data. In these circumstances the discarded tiles that are references again will need to be rasterised again using the above process.

## Claims

1. A method for shading and texturing computer graphic images in a tile based rendering system using dynamic rendering of textures for use in subsequent renders, comprising the steps of:
deriving (310) screen space geometry for a texture to be dynamically rendered;
passing the derived screen space geometry for the texture to be dynamically rendered to a tiling unit (315) to generate texture parameters (320) for each of a plurality of texture tiles;
deriving (340) screen space geometry for a scene that references the texture to be dynamically rendered;
passing the derived screen space geometry for the scene to the tiling unit (345), to generate an object list (350) for each of a plurality of scene tiles;
rendering a scene tile from the tiling unit (315, 345) using the object list for the scene tile;
**characterised by** deferring the rendering of the texture to the point at which the texture is referenced, by:
detecting a reference to a texture tile that is yet to be rendered;
switching to rendering the texture tile that is yet to be rendered;
dynamically rendering (375) the texture tile using the texture parameters for the texture tile detected as yet to be rendered; and
switching back to rendering (355) the scene tile from the tiling unit (345).

2. A method according to claim 1 in which dynamically rendered texture data is stored in a texture cache.

3. A method according to claim 1 including the step of determining whether a required texture has been previously rendered.

4. Apparatus for shading and texturing computer graphic images in a tile based rendering system using dynamic rendering of textures for use in subsequent renders, comprising;
means for deriving (310, 340) screen space geometry for a texture to be dynamically rendered and screen space geometry for a scene that references the texture to be dynamically rendered;
a tiling unit (315, 345) for receiving the screen space geometry for the texture to be dynamically rendered and the screen space geometry for a scene that references the texture to be dynamically rendered, and configured to generate texture parameters (320) for each of a plurality of texture tiles and to generate an object list (350) for each of a plurality of scene tiles;
means for rendering tiles (355, 375) from the tiling unit, wherein the means for rendering tiles is configured to render a scene tile using the object list for the scene tile
**characterised in that** the apparatus is configured to defer the rendering of the texture to the point at which the texture is referenced, by:
detecting a reference to a texture tile that is yet to be rendered; switching the means for rendering tiles to rendering the texture tile that is yet to be rendered; dynamically rendering (375) the texture tile using the texture parameters for the texture tile detected as yet to be rendered; and
switching the means for rendering tiles back to rendering (355) the scene tile from the tiling unit (345).

5. A apparatus according to claim 4 in which a texture cache stores dynamically rendered texture data.

6. An apparatus according to claim 4 including means for determining whether a required texture has been previously derived.

## Patentansprüche

1. Verfahren für das Weitergeben und Texturieren von Computergrafikbildern in einem kachelbasierten Wiedergabesystem mithilfe einer dynamischen Wiedergabe von Texturen für die Verwendung in nachfolgenden Renderern, umfassend die folgenden Schritte:
das Ableiten (310) einer Bildschirmraumgeometrie für eine Textur, die dynamisch wiedergegeben werden soll;
das Weiterleiten der abgeleiteten Bildschirmraumgeometrie für die Textur, die dynamisch wiedergegeben werden soll, an eine Kachelungseinheit (315) für die Erzeugung von Texturparametern (320) für jede der Vielzahl von Texturkacheln;
das Ableiten (340) einer Bildschirmraumgeometrie für eine Szene, die auf die Textur verweist, die dynamisch wiedergegeben werden soll;
das Weiterleiten der abgeleiteten Bildschirmraumgeometrie für die Szene an die Kachelungseinheit (345), um eine Objektliste (350) für jede der Vielzahl von Szenenkacheln zu erzeugen;
das Wiedergeben einer Szenenkachel von der Kachelungseinheit (315, 345) mithilfe der Objektliste für die Szenenkachel;
das Charakterisieren durch Aufschieben der Wiedergabe der Textur bis zu dem Punkt, an dem Folgendes auf die Textur verweist:
das Erkennen eines Verweises auf eine Texturkachel, die noch wiedergegeben werden muss;
das Wechseln zur Wiedergabe der Texturkachel, die noch wiedergegeben werden muss;
das dynamische Wiedergeben (375) der Texturkachel mithilfe der Texturparameter für die Texturkachel, die als noch wiederzugeben erkannt wurde; und
das Zurückwechseln zur Wiedergabe (355) des Szenentitels von der Kachelungseinheit (345).

2. Verfahren nach Anspruch 1, in dem dynamisch wiedergegebene Texturdaten in einem Texturcache gespeichert werden.

3. Verfahren nach Anspruch 1, umfassend den Schritt des Bestimmens, ob eine erforderliche Textur bisher wiedergegeben wurde.

4. Vorrichtung für das Weitergeben und Texturieren von Computergrafikbildern in einem kachelbasierten Wiedergabesystem mithilfe dynamischer Wiedergabe von Texturen für die Verwendung in nachfolgenden Renderern, Folgendes umfassend:
Mittel für das Ableiten (310, 340) einer Bildschirmraumgeometrie für eine Textur, die dynamisch wiedergegeben werden soll, und einer Bildschirmraumgeometrie für eine Szene, die auf die Textur verweist, die dynamisch wiedergegeben werden soll;
eine Kachelungseinheit (315, 345) für das Empfangen der Bildschirmraumgeometrie für die Textur, die dynamisch wiedergegeben werden soll, und der Bildschirmraumgeometrie für eine Szene, die auf die Textur verweist, die dynamisch wiedergegeben werden soll, und so konfiguriert ist, dass sie Texturparameter (320) für jede der Vielzahl von Texturkacheln erzeugt und eine Objektliste (350) für jede der Vielzahl von Szenenkacheln erzeugt;
Mittel für das Wiedergeben von Kacheln (355, 375) von der Kachelungseinheit, worin die Mittel für die Wiedergabe der Kacheln so konfiguriert sind, dass sie eine Szenenkachel mithilfe der Objektliste für die Szenenkachel wiedergeben;
**dadurch gekennzeichnet, dass** die Vorrichtung so konfiguriert ist, dass sie die Wiedergabe der Textur bis zu dem Punkt aufschiebt, an dem durch Folgendes auf die Textur verwiesen wird:
Erkennung eines Verweises auf eine Texturkachel, die noch wiedergegeben werden muss; Wechseln der Mittel für die Wiedergabe von Kacheln zur Wiedergabe der Texturkachel, die noch wiedergegeben werden muss; dynamische Wiedergabe (375) der Texturkachel mithilfe der Texturparameter für die Texturkachel, die als noch wiederzugeben erkannt wurde; und Wechseln der Mittel für die Wiedergabe der Kacheln zurück zur Wiedergabe (355) der Szenenkachel aus der Kachelungseinheit (345).

5. Vorrichtung gemäß Anspruch 4, in der ein Texturcache dynamisch wiedergegebene Texturdaten speichert.

6. Vorrichtung nach Anspruch 4, umfassend die Mittel für das Bestimmen, ob eine erforderliche Textur bisher abgeleitet wurde.

## Revendications

1. Procédé pour l'ombrage et la texturation d'images graphiques informatisées dans un système de rendu à base de mosaïque utilisant le rendu dynamique de textures pour une utilisation dans des rendus ultérieurs, comprenant les étapes consistant à :
la dérivation (310) d'une géométrie d'espace d'écran pour une texture devant être rendue dynamiquement ;
le passage de la géométrie d'espace d'écran dérivée pour que la texture soit rendue dynamiquement à une unité d'agencement de mosaïques (315) pour générer des paramètres de texture (320) pour chacune d'une pluralité de mosaïques de texture ;
la dérivation (340) d'une géométrie d'espace d'écran pour une scène faisant référence à la texture devant être rendue dynamiquement ;
le passage de la géométrie d'espace d'écran dérivée pour la scène à l'unité d'agencement de mosaïques (345) pour générer une liste d'objets (350) pour chacune d'une pluralité de mosaïques de scène ;
le rendu d'une mosaïque de scène à partir de l'unité d'agencement de mosaïques (315, 345) en utilisant la liste d'objets pour la mosaïque de scène ;
**caractérisé par** le report du rendu de la texture au point où la texture est référencée par :
la détection d'une référence une mosaïque de texture qui doit encore être rendue ;
la commutation au rendu de la mosaïque de texture qui doit encore être rendue ;
le rendu dynamique (375) de la mosaïque de texture en utilisant les paramètres de texture pour la mosaïque de texture détectée comme devant encore être rendue ; et
la commutation de retour au rendu (355) de la mosaïque de scène à partir de l'unité d'agencement de mosaïques (345).

2. Procédé selon la revendication 1, dans lequel les données de textures rendues dynamiquement sont stockées dans une mémoire-tampon de textures.

3. Procédé selon la revendication 1 incluant l'étape consistant à déterminer si une texture requise a été rendue auparavant.

4. Appareil pour l'ombrage et la texturation d'images graphiques informatisées dans un système de rendu à base de mosaïque utilisant le rendu dynamique de textures pour une utilisation dans des rendus ultérieurs, comprenant :
des moyens pour la dérivation (310, 340) d'une géométrie d'espace d'écran pour une texture devant être rendue dynamiquement et d'une géométrie d'espace d'écran pour une scène faisant référence à la texture devant être rendue dynamiquement
une unité d'agencement de mosaïques (315, 345) pour la réception de la géométrie d'espace d'écran pour la texture devant être rendue dynamiquement et la géométrie d'espace d'écran pour une scène faisant référence à la texture devant être rendue dynamiquement, et configurée pour générer des paramètres de texture (320) pour chacune d'une pluralité de mosaïques de texture et pour générer une liste d'objets (350) pour chacune d'une pluralité de mosaïques de scène ;
des moyens pour le rendu de mosaïques (355, 375) à partir de l'unité d'agencement de mosaïques, où les moyens pour le rendu de mosaïques sont configurés pour rendre une mosaïque de scène en utilisant la liste d'objets pour la mosaïque de scène
**caractérisé en ce que** l'appareil est configuré pour reporter le rendu de la texture au point où la texture est référencée par : la détection d'une référence une mosaïque de texture qui doit encore être rendue ; la commutation des moyens au rendu de la mosaïque de texture qui doit encore être rendue ; le rendu dynamique (375) de la mosaïque de texture en utilisant les paramètres de texture pour la mosaïque de texture détectée comme devant encore être rendue ; et la commutation des moyens de retour au rendu (355) de la mosaïque de scène à partir de l'unité d'agencement de mosaïques (345).

5. Appareil selon la revendication 4, dans lequel une mémoire-tampon de textures stocke les données de textures rendues dynamiquement.

6. Appareil selon la revendication 4 incluant des moyens pour la détermination de si une texture requise a été rendue auparavant.
